# EUROPÄISCHE PATENTSCHRIFT

(11) **EP 3 185 018 B1**
(45) Veröffentlichungstag und Bekanntmachung des Hinweises auf die Patenterteilung: **08.08.2018**
(21) Anmeldenummer: 16197571.9
(22) Anmeldetag: 07.11.2016
(51) Int. Cl.: G01P 5/26, G01P 5/14, G01P 21/02, G01C 13/00, G01F 1/00, G01F 1/66

(54) **DURCHFLUSSMESSGERÄT MIT WINDGESCHWINDIGKEITSSENSOR**
FLOW METER WITH WIND SPEED SENSOR
DÉBITMÈTRE COMPRENANT UN CAPTEUR ANÉMOMÈTRIQUE

(30) Priorität: 23.12.2015 EP 15202464
(43) Veröffentlichungstag der Anmeldung: 28.06.2017
(73) Patentinhaber: VEGA Grieshaber KG, 77709 Wolfach (DE)
(72) Erfinder: WELLE, Roland, 77756 Hausach (DE); DIETERLE, Levin, 77709 Oberwolfach (DE); BÖRSIG, Jörg, 77709 Oberwolfach (DE)
(74) Vertreter: Maiwald Patent- und Rechtsanwaltsgesellschaft mbH

(56) Entgegenhaltungen:
- DE-A1-102009 042 111
- JP-A- 2004 219 179
- US-A1- 2010 154 561
- Anonymous: "Algorithm Determines Wind Speed and Direction From Venturi-Sensor Data Speed and direction are calculated from the spatial distribution of pressure readings", Nasa Tech Briefs, December 2004, 1. Dezember 2004 (2004-12-01), Seite 24, XP055251213, Gefunden im Internet: URL:http://ntrs.nasa.gov/archive/nasa/casi .ntrs.nasa.gov/20110020451.pdf [gefunden am 2016-02-18]
- J.D. CREUTIN ET AL: "River gauging using PIV techniques: a proof of concept experiment on the Iowa River", JOURNAL OF HYDROLOGY, Bd. 277, Nr. 3-4, 1. Juni 2003 (2003-06-01), Seiten 182-194, XP055068009, ISSN: 0022-1694, DOI: 10.1016/S0022-1694(03)00081-7
- FULTON J ET AL: "Measuring real-time streamflow using emerging technologies: Radar, hydroacoustics, and the probability concept", JOURNAL OF HYDROLOGY, NORTH-HOLLAND, AMSTERDAM, NL, Bd. 357, Nr. 1-2, 30. Juli 2008 (2008-07-30), Seiten 1-10, XP022796303, ISSN: 0022-1694, DOI: 10.1016/J.JHYDROL.2008.03.028 [gefunden am 2008-04-14]

## Beschreibung

### Gebiet der Erfindung

Die Erfindung betrifft die Durchflussmessung. Insbesondere betrifft die Erfindung ein Durchflussmessgerät mit einem berührungslos messenden Fließgeschwindigkeitssensor und einem Windgeschwindigkeitssensor zum Erfassen der Windgeschwindigkeit am Ort des Messgeräts. Darüber hinaus betrifft die Erfindung ein Verfahren zur Durchflussmessung, ein Programmelement und ein computerlesbares Medium.

### Technischer Hintergrund

Bei der Überwachung von Gewässern sind verschiedene physikalische Messwerte von Bedeutung. Diese Daten können der statistischen Auswertung und als Grundlage für Planungen von baulichen Maßnahmen, als Hochwasserwarnung oder im Abwasserbereich zur Umlegung der Abwasserbehandlungskosten dienen.

Es sind Messsysteme bekannt, welche die Daten von verschiedenen Sensoren verwenden, welche in getrennten Auswertesystemen gesammelt und ausgewertet werden.

Bei der Messung von Wasserpegeln setzt sich die Radartechnik immer mehr durch, da sie gegenüber anderen Messprinzipien, wie z. B. Ultraschall, von Umwelteinflüssen, wie Temperatur, Wind oder Regen, nicht oder nur geringfügig beeinflusst wird.

DE 10 2013 213 345 A1 beschreibt ein Füllstandmessgerät zur Fließgeschwindigkeitsbestimmung eines Gewässers, dessen Sendesignal in zwei unterschiedliche Richtungen abgestrahlt werden kann, um eine Pegelstandmessung und eine lokale Dopplermessung zur Fließgeschwindigkeitsbestimmung durchzuführen.

JP 2004 219179 A beschreibt ein Verfahren zur Bestimmung der Fließrate eines offenen Kanals unter Verwendung eines Strommessers.

Die Schrift mit dem Titel "Algorithm Determines Wind Speed and Direction From Venturi-Sensor Data", NASA Tech Briefs, Dezember 2004 beschreibt die Berechnung von Windgeschwindigkeit und -richtung aus der örtlichen Verteilung von Druckmessdaten.

DE 10 2009 042 111 A1 beschreibt eine Messsonde zur Bestimmung einer Strömungsgeschwindigkeit in einem offenen Gerinne und ein Verfahren zum Bestimmen der Position der Messsonde.

Die Schrift mit dem Titel "River gauging using PIV techniques: A proof of concept experiment on the Iowa River", J. D. Creutin et al., Journal of Hydrology 277 (2003) beschreibt ein bildbasiertes Verfahren zur Geschwindigkeitsbestimmung eines Flusses.

US 2010/0154561 A1 beschreibt ein akustisches Doppler-Messsystem zur Fließgeschwindigkeitsmessung.

### Zusammenfassung der Erfindung

Es ist eine Aufgabe der Erfindung, die Bestimmung des Durchflusses eines Gewässers zu verbessern.

Diese Aufgabe wird durch die Merkmale der unabhängigen Patentansprüche gelöst. Weiterbildungen der Erfindung ergeben sich aus den Unteransprüchen und der nachfolgenden Beschreibung.

Ein erster Aspekt der Erfindung betrifft ein Durchflussmessgerät, welches einen vorzugsweise berührungslos messenden Fließgeschwindigkeitssensor zum Erfassen einer lokalen Fließgeschwindigkeit des Gewässers aufweist. Darüber hinaus weist das Durchflussmessgerät einen Windgeschwindigkeitssensor zum Erfassen der Windgeschwindigkeit vorzugsweise am Ort, an dem das Messgerät angebracht ist, auf. Fließgeschwindigkeitssensor und Windgeschwindigkeitssensor sind Teil des Durchflussmessgeräts und miteinander verbunden. Es ist eine Steuereinheit vorgesehen, die dem Berechnen der mittleren Fließgeschwindigkeit und/oder des Durchflusses des Gewässers dient. Für diese Berechnung verwendet die Steuereinheit sowohl die vom Fließgeschwindigkeitssensor als auch die vom Windgeschwindigkeitssensor erfassten Daten, also insbesondere die vom Sensor bestimmte lokale Fließgeschwindigkeit des Gewässers und die Windgeschwindigkeit am Ort des Messgeräts.

Neben der lokalen Fließgeschwindigkeit und der Windgeschwindigkeit kann vorgesehen sein, dass noch weitere Messdaten berücksichtigt werden, insbesondere der aktuelle Pegelstand des Gewässers.

In die Berechnung können darüber hinaus noch weitere Daten einfließen, welche beispielsweise im Durchflussmessgerät gespeichert sind. Hierbei kann es sich insbesondere um die Profilform der Gewässerrinne und die Position (x, y) der lokalen Fließgeschwindigkeitsmessung handeln, also um den Ort, an dem der Messstrahl des Fließgeschwindigkeitssensors auf die Oberfläche des Gewässers trifft.

Wenn der Ort des Messgeräts und damit der Ort des Windgeschwindigkeitssensors bekannt ist, kann darüber hinaus vorgesehen sein, dass aus der dort gemessenen Windgeschwindigkeit auf die voraussichtliche Windgeschwindigkeit im Bereich der Oberfläche des Gewässers rückgeschlossen wird.

Eine Auswahl oder sämtliche der oben genannten Berechnungen kann auf Basis einer Eichung erfolgen, welche beispielsweise durch eine in einem Speicher des Messgeräts abgelegten Tabelle abgebildet wird.

Gemäß einer Ausführungsform der Erfindung ist der Windgeschwindigkeitssensor an dem Fließgeschwindigkeitssensor angebracht oder in den Fließgeschwindigkeitssensor integriert. Beispielsweise kann der Windgeschwindigkeitssensor an das Gehäuse des Fließgeschwindigkeitssensors angebracht sein, insbesondere an dessen Oberseite, oder durch das Gehäuse hindurchgeführt sein.

Gemäß einer Ausführungsform der Erfindung ist der Windgeschwindigkeitssensor auch zum Erfassen der Windrichtung ausgeführt, wobei die erfasste Windrichtung von der Steuereinheit zum Berechnen der mittleren Fließgeschwindigkeit und/oder des Durchflusses des Gewässers mit zu berücksichtigen ist.

Insbesondere können mehrere Windgeschwindigkeitssensoren vorgesehen sein, welche unterschiedliche Vorzugsrichtungen aufweisen und deren Messergebnisse gemeinsam berücksichtigt werden, um einen möglichst genauen Wert für die tatsächliche Windgeschwindigkeit und Windrichtung zu erhalten.

Diese verschiedenen Sensoren können in einer Gesamteinheit integriert sein oder in Einzeleinheiten an verschiedenen Orten des Fließgeschwindigkeitssensors angebracht sein.

Gemäß einer weiteren Ausführungsform der Erfindung ist der Fließgeschwindigkeitssensor zur Durchführung einer Pegelstandmessung und einer Dopplermessung ausgeführt, deren Messergebnisse von der Steuereinheit zum Berechnen der mittleren Fließgeschwindigkeit und/oder des Durchflusses des Gewässers zu berücksichtigen sind.

Gemäß einer weiteren Ausführungsform der Erfindung weist der Windgeschwindigkeitssensor einen rohrartigen oder röhrenförmigen Bereich auf, der dem Durchleiten der Luft dient. Dieser rohrartige Bereich weist an verschiedenen Orten einen verschiedenen Querschnitt auf, sodass sich durch das Durchleiten der Luft ein Druckgradient ergibt, der von an oder in dem rohrartigen Bereich angebrachten Drucksensoren erfasst werden kann, um die Windgeschwindigkeit zu bestimmen.

Gemäß einer Ausführungsform der Erfindung weist der Windgeschwindigkeitssensor zwei parallel zueinander angeordnete Platten oder Teller zum Durchleiten von Luft auf, deren Windgeschwindigkeit zu erfassen ist. Der Hohlraum, der zwischen den Platten entsteht, weist an verschiedenen Orten einen unterschiedlichen Querschnitt auf, sodass auch hier Druckdifferenzen entstehen, welche durch entsprechend angebrachte Drucksensoren erfasst werden können, um die Windgeschwindigkeit und ggf. auch die Windrichtung zu bestimmen.

Diese Anordnung kann rotations- bzw. radialsymmetrisch ausgeführt sein, sodass ganz unterschiedliche Windrichtungen von 0 bis 360 Grad erfasst werden können.

Die hierfür verwendeten Drucksensoren können beispielsweise eine erste Gruppe aufweisen, die ringförmig angeordnet ist. Bei den ringförmig angeordneten Drucksensoren kann es sich beispielsweise um drei, vier oder mehr Drucksensoren handeln, jeweils mit konstantem Abstand zum nächsten Nachbarn.

Gemäß einer weiteren Ausführungsform der Erfindung ist die Steuereinheit zum Berechnen der mittleren Fließgeschwindigkeit und/oder des Durchflusses des Gewässers unter Berücksichtigung des Ortes der lokalen Fließgeschwindigkeit des Gewässers ausgeführt. Hierfür kann das Messgerät einen Positionssensor und/oder einen Lagesensor aufweisen, der es dem Messgerät ermöglicht, den Ort der lokalen Fließgeschwindigkeitsmessung zu bestimmen, indem die Ausrichtung und die Lage des Messgeräts, und insbesondere seiner Antenne, bestimmt wird. Dies ist vorteilhaft, da abhängig vom Rinnenquerschnitt der Gewässerrinne, der Pegelstandhöhe, dem Gefälle des Gewässers und dem Messort der lokalen Fließgeschwindigkeit die mittlere Fließgeschwindigkeit und/oder der Durchfluss berechnet wird, sodass sich nach Berücksichtigung der Windgeschwindigkeit eine möglichst genaue mittlere Fließgeschwindigkeits- und/oder Durchflussbestimmung ergibt.

Gemäß einer weiteren Ausführungsform der Erfindung ist der Windgeschwindigkeitssensor auf der Oberseite des Gehäuses des Fließgeschwindigkeitssensors angebracht. Alternativ kann der Windgeschwindigkeitssensor in dem Gehäuse des Fließgeschwindigkeitssensors angeordnet sein. Auch ist es möglich, dass ein Teil des Windgeschwindigkeitssensors auf der Oberseite des Gehäuses angeordnet ist und ein anderer Teil an einer anderen Stelle des Gehäuses.

Insbesondere können mehrere Windgeschwindigkeitssensoren vorgesehen sein, welche unterschiedliche Windmessrichtungen aufweisen.

Gemäß einer weiteren Ausführungsform der Erfindung ist der Fließgeschwindigkeitssensor als Radargerät ausgeführt. Insbesondere kann das Messgerät zum Anschluss an eine 4-20mA Zweidraht-Leitung ausgeführt sein, über welche es gleichzeitig mit Energie beliefert wird und einen Messwert übertragen kann, der proportional zum fließenden Strom ist. Auch die Kommunikation (der Datenaustausch) kann über die Zweidraht-Leitung erfolgen. Erfindungsgemäß ist die Steuereinheit ausgeführt, die mittlere Fließgeschwindigkeit des Gewässers unter Berücksichtigung der Ausrichtung des Durchflussmessgeräts relativ zum Gewässer und gegebenenfalls der Position des Durchflussmessgeräts zu berechnen. Insbesondere kann vorgesehen sein, dass die Berechnung der mittleren Fließgeschwindigkeit auch auf Basis von Daten erfolgt, die beispielsweise in einer elektronischen Karte oder, allgemeiner, in einer Geografie-Datenbank enthalten sind. Hierbei kann es sich insbesondere um die Ausrichtung des Gewässers am Montageort des Durchflussmessgeräts, die Ausrichtung des Gewässers am Ort der lokalen Fließgeschwindigkeitsmessung und ggf. der Geometrie der Gewässerrinne an diesen Orten handeln.

Die Position des Durchflussmessgeräts und/oder seine Ausrichtung relativ zum Gewässer kann in einer weiteren Ausführungsform der Erfindung vollautomatisch erfasst werden. Hierfür kann eine Positionssensoreinrichtung und/oder Lagesensoreinrichtung vorgesehen sein, welche die Position und/oder die Ausrichtung des Durchflussmessgeräts relativ zum Gewässer erfasst. Alternativ kann vorgesehen sein, dass die Positions- und/oder Ausrichtungsdaten händisch in das Messgerät eingegeben werden.

Bei der Positionssensoreinrichtung kann es sich um einen GPS-Sensor handeln, oder ein anderes Navigationssatellitensystem, wie z. B. Galileo, GLONASS, Compass oder IRNSS.

Bei der Lagesensoreinrichtung kann es sich um einen Kompass und/oder einen Neigungssensor handeln, welcher die Ausrichtung des Sensors in einer Dimension (Kompass) oder in zwei oder drei Dimensionen (Neigungssensor) erfasst. Erfindungsgemäß ist die Steuereinheit ausgeführt, um zum Bestimmen der Ausrichtung des Durchflussmessgeräts relativ zum Gewässer auf eine Datenbank zuzugreifen, in welcher die Ausrichtung des Gewässers am Montageort des Durchflussmessgeräts bzw. am Messort der lokalen Durchflussmessung bereitstellt. Diese Daten könnten beispielsweise in einer digitalen Karte hinterlegt sein oder in einer Geografie-Datenbank.

Aus den vom Messgerät erfassten Ausrichtungsdaten und der aus der Datenbank erhaltenen Gewässerausrichtung kann dann die relative Lage des Sensors vom Gewässer bestimmt werden. Es kann vorgesehen sein, dass dies vollautomatisch erfolgt, nachdem der Sensor montiert und in Betrieb genommen worden ist. Insbesondere kann vorgesehen sein, dass dies immer dann automatisch erfolgt, wenn die Lage des Sensors geändert wird.

Gemäß einer weiteren Ausführungsform der Erfindung weist der Windgeschwindigkeitssensor mehrere Ultraschallsensoren auf, welche an einer Oberfläche des Fließgeschwindigkeitssensors angeordnet sind, um die Windgeschwindigkeit und die Windrichtung zu erfassen. Diese Ultraschallwandler geben beispielsweise kontinuierlich Signale ab und der Windgeschwindigkeitssensor verwendet Variationen in diesen Signalen, um die Windrichtung und die Windgeschwindigkeit zuverlässig und genau zu messen.

Gemäß einem weiteren Aspekt der Erfindung ist ein Verfahren zur Durchflussmessung angegeben, bei dem zunächst eine Erfassung einer lokalen Fließgeschwindigkeit des Gewässers durch ein Durchflussmessgerät erfolgt. Gleichzeitig erfolgt die Erfassung der Windgeschwindigkeit am Ort des Messgeräts. Aus den gewonnenen Daten wird dann die mittlere Fließgeschwindigkeit und/oder der Durchfluss des Gewässers unter Berücksichtigung der lokalen Fließgeschwindigkeit und der Windgeschwindigkeit bestimmt. In diese Berechnung können noch weitere Daten einfließen, wie oben beschrieben.

Ein weiterer Aspekt der Erfindung betrifft ein Programmelement, das, wenn es auf dem Prozessor eines Durchflussmessgeräts ausgeführt wird, das Messgerät anleitet, die oben und im Folgenden beschriebenen Schritte durchzuführen.

Gemäß einem weiteren Aspekt der Erfindung ist ein computerlesbares Medium angegeben, auf dem ein oben beschriebenes Programmelement gespeichert ist.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Durchflussmessgerät gemäß einem Ausführungsbeispiel der Erfindung.
Fig. 2 zeigt den Querschnitt einer Gewässerrinne, in dem das zu vermessende Gewässer fließt.
Fig. 3 zeigt einen Windgeschwindigkeitssensor eines Durchflussmessgeräts gemäß einem Ausführungsbeispiel der Erfindung.
Fig. 4 zeigt einen Windgeschwindigkeitssensor eines Durchflussmessgeräts gemäß einem weiteren Ausführungsbeispiel der Erfindung.
Fig. 5 zeigt eine Querschnittsdarstellung des Sensors der Fig. 4.
Fig. 6 zeigt ein Flussdiagramm eines Verfahrens gemäß einem Ausführungsbeispiel der Erfindung.
Fig. 7 zeigt ein Messsystem mit einem Durchflussmessgerät und einem Server gemäß einem Ausführungsbeispiel der Erfindung.
Fig. 8a zeigt ein Durchflussmessgerät gemäß einem weiteren Ausführungsbeispiel der Erfindung.
Fig. 8b zeigt das Durchflussmessgerät der Fig. 8a von oben aus gesehen.

### Detaillierte Beschreibung von Ausführungsbeispielen

Die Darstellungen in den Figuren sind schematisch und nicht maßgeblich.

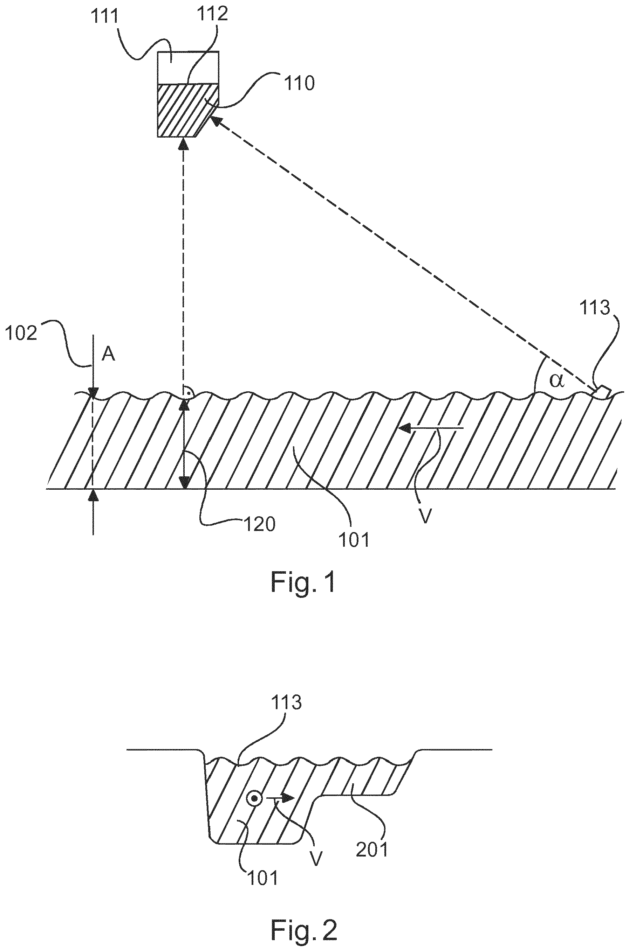

Fig. 1 zeigt ein Durchflussmessgerät gemäß einem Ausführungsbeispiel der Erfindung. Das Messgerät weist einen berührungslos messenden Fließgeschwindigkeitssensor 110, beispielsweise in Form eines Füllstandradars mit zwei Antennen unterschiedlicher Hauptabstrahlrichtung, auf, so dass zwei Messsignale in unterschiedliche Richtungen abgestrahlt werden können. Das erste Messsignal wird senkrecht zur Oberfläche des Gewässers 101 abgestrahlt und das zweite Signal in einem Winkel α hierzu.

Aus dem ersten Signal kann der Pegelstand 120 gewonnen werden und aus dem zweiten Signal die Fließgeschwindigkeit v des Gewässers am Ort 113, unter Verwendung des Dopplerprinzips.

An dem Fließgeschwindigkeitssensor 110 ist ein Windgeschwindigkeitssensor 111 angebracht, der sich im Ausführungsbeispiel der Fig. 1 auf der Oberseite 112 des Fließgeschwindigkeitssensors befindet. Dieser Windgeschwindigkeitssensor 111 dient dem Erfassen der Windgeschwindigkeit am Ort des Messgeräts 111, 110. Die erfasste Windgeschwindigkeit wird herangezogen, um die Fließgeschwindigkeit des Gewässers 101 genauer bestimmen zu können.

Das kombinierte Pegel/Dopplermessgerät 110, welches senkrecht nach unten den Pegel 120 und unter einem Winkel α die Oberflächengeschwindigkeit des fließenden Mediums 101 misst, besitzt einen zusätzlichen Windsensor 111.

Fig. 2 zeigt den Querschnitt des Gerinnes 201 entlang der Schnittlinie 102 der Fig. 1.

Sowohl die Windgeschwindigkeit, der Pegelstand 120, die Fließgeschwindigkeit der Gewässeroberfläche am Ort 113 als auch die Abmessungen des Gerinnes, sowie die Position 113, an welcher die Oberflächenfließgeschwindigkeit des Gewässers gemessen wird, können in die Berechnung der mittleren Fließgeschwindigkeit und/oder des Durchflusses mit einfließen.

Die Pegelmessung und die Dopplermessung können separat durchgeführt werden. Aus der Kenntnis des Gerinnequerschnitts und unter Berücksichtigung der Fließgeschwindigkeit am Ort 113 sowie des Pegelstandes kann die Durchflussmenge in guter Näherung bestimmt werden. Solche Informationen sind insbesondere für die Hochwasservorhersage und Warnung an Flüssen oder die Aufteilung der Kosten an Klärwerken interessant. Aufgrund der geringen Eindringtiefe von Radarwellen in Wasser wird von dem Durchflussmessgerät insbesondere die Geschwindigkeit an der Oberfläche des Gewässers ermittelt.

In einer Vielzahl von Anwendungen wird die Geschwindigkeit des Oberflächenwassers durch die oberflächennahen Luftströmungen verändert. Somit können sich Messfehler in der eigentlichen Durchflussmessung ergeben, wenn von einer falschen Geschwindigkeit des Mediums ausgegangen wird.

Durch die Integration des Windsensors 111 in das Durchflussmessgerät wird dieses in die Lage versetzt, die ermittelte Dopplergeschwindigkeit zu verifizieren oder auch zu korrigieren. Die von dem Messgerät ermittelte Dopplergeschwindigkeit hängt mit der mittleren Fließgeschwindigkeit des Gewässers zusammen, muss jedoch nicht mit dieser übereinstimmen. Die mittlere Fließgeschwindigkeit hängt insbesondere von weiteren Parametern ab, wie Gerinnetiefe, Gerinneform, Beschaffenheit der Gerinneoberfläche (glatt oder steinig), Pegelhöhe, Gefälle und natürlich der Windgeschwindigkeit sowie dem Messort der Fließgeschwindigkeit.

Zur tatsächlichen Berechnung der durchschnittlichen Fließgeschwindigkeit des Gewässers bzw. des Durchflusses kann eine Korrekturtabelle im Messgerät abgelegt sein, welche anhand der gemessenen Dopplergeschwindigkeit, des Pegelstandes und/oder der aktuellen Windgeschwindigkeit und -richtung eine näherungsweise Bestimmung der Fließgeschwindigkeit des Gewässers ermöglicht.

Durch die berührungslose Messung der Fließgeschwindigkeit außerhalb des fließenden Mediums ist zudem eine Beschädigung bzw. Verschmutzung des Sensors durch Treibgut bzw. Schlamm o. Ä. nicht möglich oder zumindest unwahrscheinlich. Somit ist das Durchflussmessgerät im Gegensatz zu bekannten Messgeräten sehr robust und weniger fehleranfällig.

Insbesondere können in der "Korrekturtabelle" verschiedene Messszenarien gespeichert sein, welche unterschiedliche Gerinneformen, Gefälle und Messorte für Windgeschwindigkeit und/oder Fließgeschwindigkeit berücksichtigen.

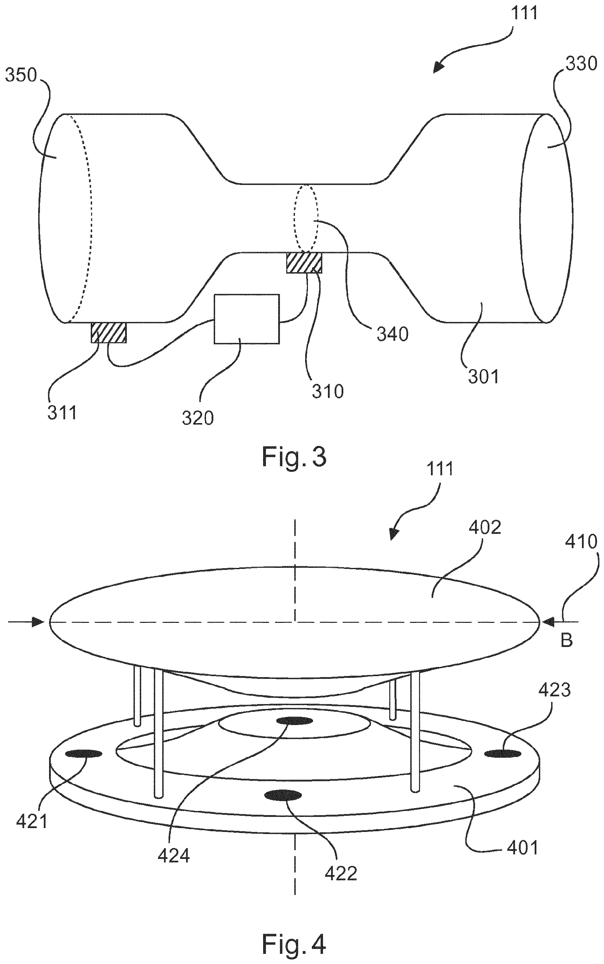

Fig. 3 zeigt einen Windsensor 111 zur Integration in einem Durchflussmessgerät gemäß einem Ausführungsbeispiel der Erfindung. Der Windsensor weist einen röhrenförmigen Kanal 301 auf, der in Fließrichtung des Gewässers ausgerichtet sein kann. Der Kanal weist einen beispielsweise kreisrunden Querschnitt auf, dessen Durchmesser an den Enden 330, 350 des Kanals größer ist als in dessen Mitte 340. In der Mitte des Kanals bzw. Rohres verjüngt sich somit dessen Durchmesser, sodass sich die Windgeschwindigkeit an dieser Stelle erhöht und somit der Druck der strömenden Luft an dieser Stelle reduziert ist.

Durch die Ermittlung des Differenzdrucks zwischen den entsprechend empfindlichen Drucksensoren 310 und 311 in der daran angeschlossenen Auswerteeinheit (Prozessor) 320 lässt sich auf den Betrag der Windgeschwindigkeit entlang der Fließrichtung des Gewässers zurückschließen.

Die Drucksensoren 310, 311 sind beispielsweise an der Außenseite des röhrenförmigen Kanals 301 angeordnet, haben jedoch Zugang zum Inneren des Kanals, um dort den Druck messen zu können.

Es können natürlich auch mehr als zwei Drucksensoren angeordnet sein, was zur Folge haben kann, dass die Windgeschwindigkeit noch genauer bestimmt werden kann.

Fig. 4 zeigt einen Windgeschwindigkeitssensor 111 für ein Durchflussmessgerät gemäß einem weiteren Ausführungsbeispiel der Erfindung. In diesem Ausführungsbeispiel weist der Sensor zwei rotationssymmetrische Platten 401, 402 auf, deren Abstand sich in der Mitte durch eine Auswölbung reduziert. Um diese Auswölbung herum sind hierbei mindestens drei Sensoren im Winkel von 120 Grad zueinander, beispielsweise aber auch vier Sensoren 421, 422, 423 (der vierte Sensor ist nicht zu sehen) im Winkel von 90 Grad konzentrisch zum Mittelpunkt einer der Platten angeordnet. Es können auch mehr Drucksensoren entlang dieses Kreises im Außenbereich der unteren Platte angeordnet sein. Ebenso können auch entsprechende Drucksensoren auf der oberen Platte angeordnet sein. Im Mittelpunkt befindet sich ein weiterer Drucksensor 424, sodass der Differenzdruck zwischen dem Außenbereich, in dem die vier Sensoren 421, 422, 423 (der vierte ist nicht zu sehen) angeordnet sind, und dem Mittelbereich, in dem der Sensor 424 angeordnet ist, bestimmt werden kann.

Der Windgeschwindigkeitssensor ist in einem Winkelbereich von 360 Grad (also nach allen Seiten hin) offen, sodass neben der Windgeschwindigkeit auch die Windrichtung bestimmt werden kann. Alternativ können die Drucksensoren auch auf der Schrägfläche 450 der oberen Platte 402 oder auf der Schnittfläche 430 der unteren Platte 401 angeordnet sein. Auch ist die Anordnung weiterer Drucksensoren möglich. Sämtliche Drucksensoren sind mit dem Prozessor 320 (Steuereinheit) verbunden, welcher die Berechnung von Windgeschwindigkeit und Windrichtung vornehmen kann.

Beispielsweise sind die Drucksensoren in die entsprechende Platte integriert und weisen einen Zugang zu dem Raum zwischen den beiden Platten auf, durch welche der Wind hindurchweht.

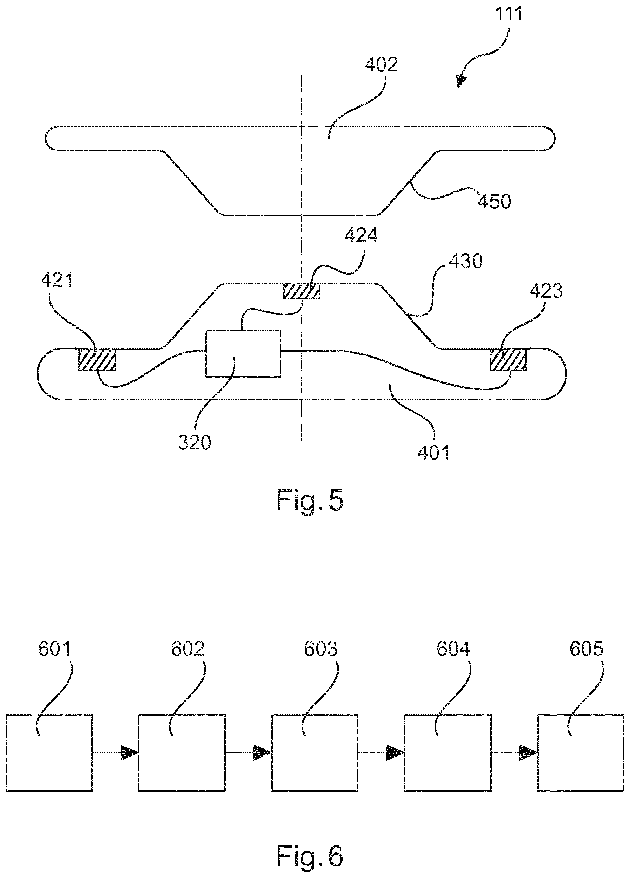

Fig. 5 zeigt eine Querschnittsdarstellung des Windsensors der Fig. 4 entlang der Linie 410. Die Verjüngung sowohl im radialsymmetrischen Fall als auch im Rohr gemäß Fig. 3 ist derart, dass sich keine unerwünschten Verwirbelungen und Turbulenzen entwickeln.

Fig. 6 zeigt ein Flussdiagramm eines Verfahrens gemäß einem Ausführungsbeispiel der Erfindung. In Schritt 601 erfolgt eine Pegelmessung zur Bestimmung des Pegels des fließenden Gewässers. In Schritt 602 erfolgt eine Fließgeschwindigkeitsbestimmung an einem bestimmten Bereich des Gewässers, beispielsweise durch eine Dopplermessung. In Schritt 603 erfolgt darüber hinaus die Bestimmung der Windgeschwindigkeit am Ort des Durchflussmessgeräts und in Schritt 604 wird der Durchfluss des Gewässers bestimmt, indem hierfür die drei erfassten Messwerte berücksichtigt werden. Die Schritte 601 bis 603 können auch in anderer Reihenfolge und/oder gleichzeitig durchgeführt werden.

In Schritt 605 wird der vom Gerät berechnete Durchfluss an eine externe Einheit übermittelt.

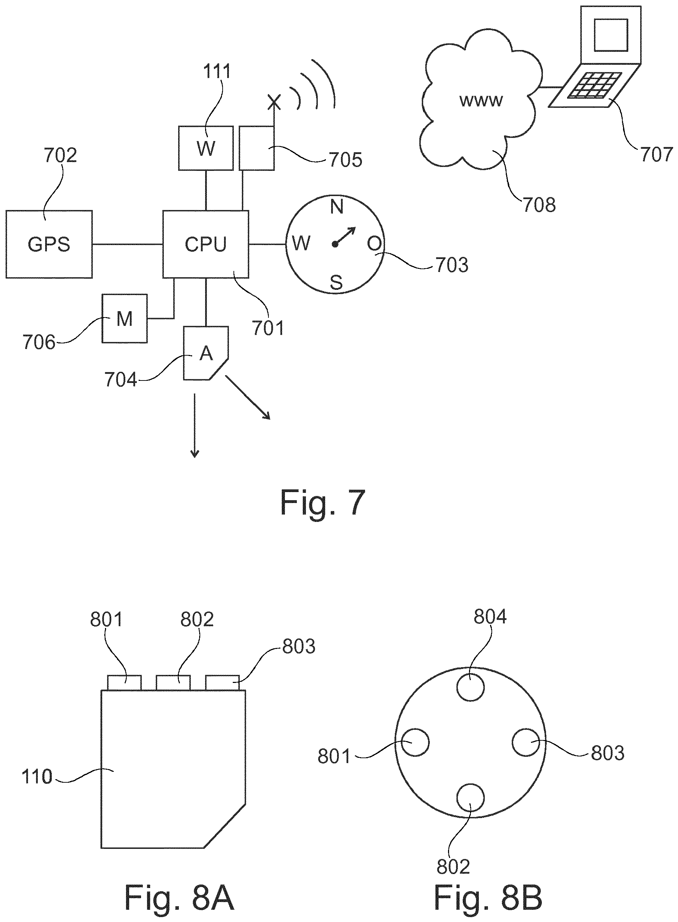

Fig. 7 zeigt ein Messsystem mit einem Durchflussmessgerät und einem Server 707, der eine Datenbank enthält. Das Durchflussmessgerät und der Server können über das Internet 708 drahtlos kommunizieren. Hierfür ist ein Kommunikationsmodul 705 im Durchflussmessgerät vorgesehen. Das Durchflussmessgerät weist eine Steuereinheit 701 auf, an welche ein GPS-Modul 702 zur Erfassung der Messgeräteposition und eine Lageerfassungseinheit 703 zum Erfassen der Lage des Durchflussmessgeräts angeschlossen sind. Darüber hinaus sind der Windgeschwindigkeitssensor 111 und der Sensor 704 zur Bestimmung des Füllstands und der Fließgeschwindigkeit an die Steuereinheit angeschlossen. Auch ist im Messgerät ein Datenspeicher 706 vorgesehen, auf dem beispielsweise Geografiedaten bzw. digitale Kartendaten gespeichert sein können.

Der Montageort des Messgeräts kann über GPS oder durch Eingabe des Benutzers ermittelt werden. Die aktuelle Ausrichtung (Nord/Süd) in Relation zu den Daten der Datenbank kann über einen im Messgerät integrierten Kompass ermittelt werden oder auch aus Analyse einer weiteren (Geografie-)Datenbank, welche die Ausrichtung des Gewässers am Montageort bereitstellt.

Ist das Durchflussmessgerät nicht senkrecht zur Fließrichtung des Gewässers montiert, kann es ausgeführt sein, eine Korrektur der gemessenen Fließgeschwindigkeit in Abhängigkeit von der Abweichung seiner Lage von der Senkrechten zur Fließrichtung des Gewässers zu berechnen. Es kann vorgesehen sein, dass auch dieses vollautomatisch erfolgt.

Die Abweichung der Sensorlage von der Senkrechten zur Fließrichtung des Gewässers kann in einem Ausführungsbeispiel vom Sensor automatisch ermittelt werden, indem hierfür GPS, Kompass und Geografie-Datenbank genutzt werden.

Fig. 8a zeigt ein Durchflussmessgerät gemäß einem weiteren Ausführungsbeispiel der Erfindung, bei dem mehrere Ultraschallsensoren 801, 802, 803, 804 (vgl. Fig. 8b) auf der Oberseite des Messgeräts angebracht sind. Der Querschnitt des Messgeräts ist beispielsweise kreisrund und es sind vier Sensoren 801, 802, 803, 804 vorgesehen, die an verschiedenen Positionen angebracht sind. Bei diesen Sensoren handelt es sich beispielsweise um Piezosensoren. Die Sensoren können sowohl als Sender als auch als Empfänger eingesetzt werden und senden sich gegenseitig Signale. Die Sensoren können die Dämpfung und/oder die Dopplerverschiebung und/oder die Laufzeitänderung der gesendeten Messsignale messen. Durch Kombination dieser Messergebnisse in der Steuereinheit 701 (vgl. Fig. 7) kann auf die Windstärke und die Windrichtung geschlossen werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Durchflussmessgerät, aufweisend:
einen berührungslos messenden Fließgeschwindigkeitssensor (110) zum Erfassen einer lokalen Fließgeschwindigkeit eines Gewässers;
einen Windgeschwindigkeitssensor (111) zum Erfassen der Windgeschwindigkeit;
eine Steuereinheit (320) zum Berechnen der mittleren Fließgeschwindigkeit des Gewässers unter Berücksichtigung der lokalen Fließgeschwindigkeit und der Windgeschwindigkeit;
wobei die Steuereinheit zum Berechnen der mittleren Fließgeschwindigkeit des Gewässers die Ausrichtung des Durchflussmessgeräts relativ zum Gewässer berücksichtigt;
wobei die Steuereinheit zum Bestimmen der Ausrichtung des Durchflussmessgeräts relativ zum Gewässer auf eine Datenbank zugreifen kann, welche die Ausrichtung des Gewässers am Montageort des Durchflussmessgeräts bereitstellt.

2. Durchflussmessgerät nach Anspruch 1,
wobei der Windgeschwindigkeitssensor (111) an dem Fließgeschwindigkeitssensor (110) angebracht ist oder in den Fließgeschwindigkeitssensor integriert ist.

3. Durchflussmessgerät nach Anspruch 1 oder 2,
wobei der Windgeschwindigkeitssensor (111) zum Erfassen der Windrichtung ausgeführt ist;
wobei die erfasste Windrichtung von der Steuereinheit (320) zum Berechnen des Durchflusses des Gewässers zu berücksichtigen ist.

4. Durchflussmessgerät nach einem der vorhergehenden Ansprüche,
wobei die Steuereinheit (320) zum Berechnen der mittleren Fließgeschwindigkeit des Gewässers die Position des Durchflussmessgeräts berücksichtigt.

5. Durchflussmessgerät nach Anspruch 4, weiter aufweisend:
eine Positions- und eine Lagesensoreinrichtung (702, 703) zum Erfassen der Position und der Ausrichtung des Durchflussmessgeräts relativ zum Gewässer.

6. Durchflussmessgerät nach einem der vorhergehenden Ansprüche,
wobei der Fließgeschwindigkeitssensor (110) zur Durchführung einer Pegelstandmessung und einer Dopplermessung ausgeführt ist, deren Messergebnisse von der Steuereinheit (320) zum Berechnen der mittleren Fließgeschwindigkeit oder des Durchflusses des Gewässers zu berücksichtigen sind.

7. Durchflussmessgerät nach einem der vorhergehenden Ansprüche,
wobei der Windgeschwindigkeitssensor (111) einen rohrartigen Bereich (301, 302) mit variierendem Querschnitt zum Durchleiten von Luft, deren Windgeschwindigkeit zu erfassen ist, aufweist;
wobei an oder in dem rohrartigen Bereich mehrere Drucksensoren (310, 311) angeordnet sind, um einen lokalen Druckunterschied zwischen den Orten der Drucksensoren zu erfassen.

8. Durchflussmessgerät nach einem der vorhergehenden Ansprüche,
wobei der Windgeschwindigkeitssensor (111) zwei parallel zueinander angeordnete Platten (401, 402) zum Durchleiten von Luft, deren Windgeschwindigkeit zu erfassen ist, aufweist;
wobei an oder in dem Bereich zwischen den beiden Platten mehrere Drucksensoren (421, 422, 423, 424) angeordnet sind, um lokale Druckunterschiede zwischen den Orten der Drucksensoren zu erfassen.

9. Durchflussmessgerät nach einem der vorhergehenden Ansprüche,
wobei der Windgeschwindigkeitssensor (111) mehrere Ultraschallsensoren (801, 802, 803, 804) aufweist, welche an der Oberfläche des Fließgeschwindigkeitssensors (110) angeordnet sind, um die Windgeschwindigkeit und die Windrichtung zu erfassen.

10. Durchflussmessgerät nach einem der vorhergehenden Ansprüche,
wobei die Steuereinheit (320) zum Berechnen der mittleren Fließgeschwindigkeit und/oder des Durchflusses des Gewässers unter Berücksichtigung des Ortes der lokalen Fließgeschwindigkeit des Gewässers ausgeführt ist.

11. Durchflussmessgerät nach einem der vorhergehenden Ansprüche,
wobei der Windgeschwindigkeitssensor (111) auf der Oberseite (112) eines Gehäuses oder in dem Gehäuse des Fließgeschwindigkeitssensors (110) angebracht ist.

12. Verfahren zur Durchflussmessung, aufweisend die Schritte:
Erfassen einer lokalen Fließgeschwindigkeit eines Gewässers (101) durch ein Durchflussmessgerät (110, 111);
Erfassen der Windgeschwindigkeit am Ort des Messgeräts;
Berechnen der mittleren Fließgeschwindigkeit des Gewässers unter Berücksichtigung der lokalen Fließgeschwindigkeit, der Windgeschwindigkeit und der Ausrichtung des Durchflussmessgeräts relativ zum Gewässer;
wobei zum Bestimmen der Ausrichtung des Durchflussmessgeräts relativ zum Gewässer auf eine Datenbank zugegriffen wird, welche die Ausrichtung des Gewässers am Montageort des Durchflussmessgeräts bereitstellt.

13. Programmelement, das, wenn es auf einem Prozessor (320) eines Durchflussmessgeräts (110, 111) ausgeführt wird, das Messgerät anleitet, die folgenden Schritte durchzuführen:
Erfassen einer lokalen Fließgeschwindigkeit eines Gewässers (101) durch das Durchflussmessgerät;
Erfassen der Windgeschwindigkeit am Ort des Messgeräts;
Berechnen der mittleren Fließgeschwindigkeit des Gewässers unter Berücksichtigung der lokalen Fließgeschwindigkeit, der Windgeschwindigkeit und der Ausrichtung des Durchflussmessgeräts relativ zum Gewässer;
wobei zum Bestimmen der Ausrichtung des Durchflussmessgeräts relativ zum Gewässer auf eine Datenbank zugegriffen wird, welche die Ausrichtung des Gewässers am Montageort des Durchflussmessgeräts bereitstellt.

14. Computerlesbares Medium, auf dem ein Programmelement nach Anspruch 13 gespeichert ist.

## Claims

1. Flow measuring instrument comprising:
a contactlessly measuring flow rate sensor (110) configured to detect a local flow rate of a watercourse;
a wind velocity sensor (111) configured to detect the wind velocity;
a control unit (320) configured to calculate the average flow rate of the watercourse, taking into account the local flow rate and the wind velocity;
wherein the control unit takes into account the orientation of the flow measuring instrument relative to the watercourse in order to calculate the average flow rate,
wherein the control unit can access a database that provides the orientation of the watercourse at the location at which the flow measuring instrument is mounted, in order to determine the orientation of the flow measuring instrument relative to the watercourse.

2. Flow measuring instrument according to claim 1,
wherein the wind velocity sensor (111) is attached to the flow rate sensor (110) or is integrated in the flow rate sensor.

3. Flow measuring instrument according to either claim 1 or claim 2,
wherein the wind velocity sensor (111) is configured to detect the wind direction, wherein the detected wind direction is to be taken into account by the control unit (320) in order to calculate the flow of the watercourse.

4. Flow measuring instrument according to any of the preceding claims,
wherein the control unit (320) takes into account the position of the flow measuring instrument in order to calculate the average flow rate.

5. Flow measuring instrument according to claim 4, further comprising:
a position and a location sensor device (702, 703) for determining the position and the orientation of the flow measuring instrument relative to the watercourse.

6. Flow measuring instrument according to any of the preceding claims,
wherein the flow rate sensor (110) is configured to measure the water level and to carry out a Doppler measurement, the measurement results from which are to be taken into account by the control unit (320) in order to calculate the average flow rate or the flow of the watercourse.

7. Flow measuring instrument according to any of the preceding claims,
wherein the wind velocity sensor (111) comprises a tubular region (301, 302) of varying cross section for air to pass through, the wind velocity of which air is to be detected;
wherein a plurality of pressure sensors (310, 311) are arranged on or in the tubular region in order to detect a local pressure difference between the locations of the pressure sensors.

8. Flow measuring instrument according to any of the preceding claims,
wherein the wind velocity sensor (111) comprises two plates (401, 402) arranged in parallel with one another for the passage of air, the wind velocity of which air is to be detected;
wherein a plurality of pressure sensors (421, 422, 423, 424) are arranged on or in the region between the two plates, in order to detect local pressure differences between the locations of the pressure sensors.

9. Flow measuring instrument according to any of the preceding claims,
wherein the wind velocity sensor (111) comprises a plurality of ultrasonic sensors (801, 802, 803, 804) which are arranged on the surface of the flow rate sensor (110) in order to detect the wind velocity and the wind direction.

10. Flow measuring instrument according to any of the preceding claims,
wherein the control unit (320) is configured to calculate the average flow rate and/or the flow of the watercourse, taking into account the location of the local flow rate of the watercourse.

11. Flow measuring instrument according to any of the preceding claims,
wherein the wind velocity sensor (111) is attached either to the upper side (112) of a housing or arranged in the housing of the flow rate sensor (110).

12. Method for measuring flow, comprising the steps of:
detecting a local flow rate of a watercourse (101) by means of a flow measuring instrument (110, 111);
detecting the wind velocity at the location of the measuring instrument;
calculating the average flow velocity of the watercourse, taking into account the local flow rate, the wind velocity and the orientation of the flow measuring instrument relative to the watercourse;
wherein a database is accessed that provides the orientation of the watercourse at the location at which the flow measuring instrument is mounted, in order to determine the orientation of the flow measuring instrument relative to the watercourse.

13. Program element, which, when implemented on a processor (320) of a flow measuring instrument (110, 111), instructs the measuring instrument to carry out the following steps:
detecting a local flow rate of a watercourse (101) by means of the flow measuring instrument;
detecting the wind velocity at the location of the measuring instrument;
calculating the average flow rate of the watercourse, taking into account the local flow rate, the wind velocity and the orientation of the flow measuring instrument relative to the watercourse;
wherein a database is accessed that provides the orientation of the watercourse at the location at which the flow measuring instrument is mounted, in order to determine the orientation of the flow measuring instrument relative to the watercourse.

14. Computer-readable medium, on which a program element according to claim 13 is stored.

## Revendications

1. Appareil de mesure de débit comportant :
un capteur de vitesse d'écoulement effectuant des mesures sans contact (110) pour détecter une vitesse d'écoulement locale d'un cours d'eau,
un capteur de vitesse de vent (111) pour détecter la vitesse du vent,
une unité de commande (320) pour calculer la vitesse moyenne d'écoulement du cours d'eau en tenant compte de la vitesse d'écoulement locale et de la vitesse du vent,
dans lequel pour calculer la vitesse moyenne d'écoulement du cours d'eau, l'unité de commande tient compte de l'orientation de l'appareil de mesure de débit par rapport au cours d'eau,
dans lequel pour déterminer l'orientation de l'appareil de mesure de débit par rapport au cours d'eau, l'unité de commande peut accéder à une base de données qui fournit l'orientation du cours d'eau à l'emplacement de montage de l'appareil de mesure de débit.

2. Appareil de mesure de débit selon la revendication 1,
dans lequel le capteur de vitesse de vent (111) est fixé sur le capteur de vitesse d'écoulement (110) ou est intégré dans le capteur de vitesse d'écoulement.

3. Appareil de mesure de débit selon la revendication 1 ou 2,
dans lequel le capteur de vitesse de vent (111) est configuré pour détecter la direction du vent,
dans lequel la direction de vent détectée par l'unité de commande (320) doit être prise en compte pour calculer le débit du cours d'eau.

4. Appareil de mesure de débit selon l'une des revendications précédentes,
dans lequel pour calculer la vitesse moyenne d'écoulement du cours d'eau, l'unité de commande (320) tient compte de la position de l'appareil de mesure de débit.

5. Appareil de mesure de débit selon la revendication 4, comportant en outre :
un dispositif de détection de position et un dispositif de localisation (702, 703) pour détecter la position et l'orientation de l'appareil de mesure de débit par rapport au cours d'eau.

6. Appareil de mesure de débit selon l'une des revendications précédentes,
dans lequel le capteur de vitesse d'écoulement (110) est configuré pour effectuer une mesure de hauteur d'eau et une mesure Doppler dont les résultats de mesure doivent être pris en compte par l'unité de commande (320) pour calculer la vitesse moyenne d'écoulement ou le débit du cours d'eau.

7. Appareil de mesure de débit selon l'une des revendications précédentes,
dans lequel le capteur de vitesse de vent (111) comporte une zone tubulaire (301, 302) à section variable dans laquelle passe l'air dont la vitesse de vent doit être détectée,
dans lequel plusieurs capteurs de pression (310, 311) sont agencés sur ou dans la zone tubulaire afin de détecter une différence de pression locale entre les emplacements des capteurs de pression.

8. Appareil de mesure de débit selon l'une des revendications précédentes,
dans lequel le capteur de vitesse de vent (111) comporte deux plaques (401, 402) agencées parallèlement l'une à l'autre entre lesquelles passe l'air dont la vitesse de vent doit être détectée,
dans lequel plusieurs capteurs de pression (421, 422, 423, 424) sont agencés sur ou dans la zone entre les deux plaques afin de détecter des différences de pression locales entre les emplacements des capteurs de pression.

9. Appareil de mesure de débit selon l'une des revendications précédentes,
dans lequel le capteur de vitesse de vent (111) comporte plusieurs capteurs à ultrasons (801, 802, 803, 804) qui sont agencés à la surface du capteur de vitesse d'écoulement (110) afin de détecter la vitesse du vent et la direction du vent.

10. Appareil de mesure de débit selon l'une des revendications précédentes,
dans lequel l'unité de commande (320) est configurée pour calculer la vitesse moyenne d'écoulement et/ou le débit du cours d'eau en tenant compte de l'emplacement de la vitesse d'écoulement locale du cours d'eau.

11. Appareil de mesure de débit selon l'une des revendications précédentes,
dans lequel le capteur de vitesse de vent (111) est fixé sur la face supérieure (112) d'un boîtier ou dans le boîtier du capteur de vitesse d'écoulement (110).

12. Procédé de mesure de débit comportant les étapes consistant à :
détecter une vitesse d'écoulement locale d'un cours d'eau (101) par l'intermédiaire d'un appareil de mesure de débit (110, 111),
détecter la vitesse du vent à l'emplacement de l'appareil de mesure,
calculer la vitesse moyenne d'écoulement du cours d'eau en tenant compte de la vitesse d'écoulement locale, de la vitesse du vent et de l'orientation de l'appareil de mesure de débit par rapport au cours d'eau,
dans lequel il est accédé à une base de données afin de déterminer l'orientation de l'appareil de mesure de débit par rapport au cours d'eau, laquelle base de données fournit l'orientation du cours d'eau à l'emplacement de montage de l'appareil de mesure de débit.

13. Elément de programme qui, lorsqu'il est exécuté sur un processeur (320) d'un appareil de mesure de débit (110, 111) amène l'appareil de mesure à exécuter les étapes suivantes :
détecter une vitesse d'écoulement locale d'un cours d'eau (101) par l'intermédiaire de l'appareil de mesure de débit,
détecter la vitesse du vent à l'emplacement de l'appareil de mesure,
calculer la vitesse moyenne d'écoulement du cours d'eau en tenant compte de la vitesse d'écoulement locale, de la vitesse du vent et de l'orientation de l'appareil de mesure de débit par rapport au cours d'eau,
dans lequel il est accédé à une base de données afin de déterminer l'orientation de l'appareil de mesure de débit par rapport au cours d'eau, laquelle base de données fournit l'orientation du cours d'eau à l'emplacement de montage de l'appareil de mesure de débit.

14. Support lisible par ordinateur sur lequel est stocké un élément de programme selon la revendication 13.
